# EUROPEAN PATENT SPECIFICATION

(11) **EP 3 012 307 B1**
(45) Date of publication and mention of the grant of the patent: **25.07.2018**
(21) Application number: 14813024.8
(22) Date of filing: 20.06.2014
(51) Int. Cl.: C09K 5/04

(54) **MIXED REFRIGERANT**
GEMISCHTES KÄLTEMITTEL
FRIGORIGÈNE MIXTE

(30) Priority: 21.06.2013 CN 201310251473
(43) Date of publication of application: 27.04.2016
(73) Proprietor: Zhejiang Lantian Environmental Protection Hi-Tech Co. Ltd., Zhejiang 310018 (CN); Sinochem Lantian Co., Ltd., Hangzhou, Zhejiang 310051 (CN)
(72) Inventor: GUO, Zhikai, Hangzhou Zhejiang 310023 (CN); XIE, Pinzan, Hangzhou Zhejiang 310023 (CN)
(74) Representative: Kransell & Wennborg KB
(86) International application number: PCT/CN2014/080373
(87) International publication number: WO 2014/202017

(56) References cited:
- CN-A- 101 014 680
- CN-A- 102 433 197
- CN-A- 102 971 394
- CONG, WEI ET AL.: 'Study On The Performance Of F-Methyl Methyl Ether (Hfe143a) As A Refrigerant For Automobile Air-Conditioning' REFRIGERATION & AIR CONDITIONING vol. 22, no. 1, 29 February 2008, pages 76 - 77, XP055252413

## Description

### FIELD OF THE INVENTION

The present invention relates to a mixed refrigerant, in particular, to a refrigerant composition with extremely low greenhouse effect and no damage to atmosphere ozonosphere that can directly be in the automotive air conditioner system.

### BACKGROUND OF THE INVENTION

1, 1, 1, 2-tetrafluoroethane (HFC-134a), as an alternative to CFC-12, has been widely used with its excellent performance. However, due to its high value of GWP up to 1430, it has been listed in one of the refrigerants with high GWP that are firstly eliminated in "Kyoto Protocol". In accordance with the MAC DIRECTIVE (2006/40/EC) about the automotive air conditioner system emissions officially implemented since 2013, to the end of 2016, the refrigerant with GWP value greater than 150 must be greatly eliminated in the automotive air conditioners, and since January 1, 2017, the refrigerant with GWP value greater than 150 will be prohibited in all automotive air conditioners. Therefore, to seek for an alternative to refrigerant HFC-134a most widely used in automotive air conditioners has become a hot issue and an urgent problem to be resolved across the world.

At present, internationally, the main alternatives to HFC-134a are carbon dioxide (CO₂), 1, 1-difluoroethane (HFC-152a), 2, 3, 3, 3- tetrafluoropropene (HFO-1234yf), etc. But they have their advantages and disadvantages. CO₂ is environmentally friendly and non-combustible, but the system pressure is high, the energy efficiency is low, and the system should be re-designed with high costs. HFC-152a has a high energy efficient and low price of refrigerant, but its flammability is strong and it is necessary to add secondary loop, which causes a high costs. HFO-1234yf has low flammability, small system transformation but its energy inefficient is low and the cooling capacity is low. Therefore, the studies on the alternative to HFC-134a have been continuously carried out in various countries across the world.

In the prior art, Patent Document CN1285699C (200410084844.5) discloses a ternary composition composed of fluoroethane (HFC-161), 1,1-difluoroethane (HFC-152a) and 1, 1, 1,2- tetrafluoroethane (HFC-134a); CN101671542A (200910018489.4) discloses a mixture composed of 2, 3, 3, 3-tetrafluoropropene (HFO-1234yf), 1, 1-difluoroethane (HFC-152a) and isobutene; CN101864277A (201010196224.6) discloses a mixture composed of 2, 3, 3, 3-tetrafluoropropene (HFC-1234yf), 1, 1- difluoroethane (HFC-152a) and dimethyl ether (DME); CN102703033A (201210165277.0) discloses a mixture composed of 2, 3, 3, 3-tetrafluoropropene (HFC-1234yf), 1, 1, 1, 2-tetrafluoroethane (HFC 134a) and dimethyl ether (DME); CN102066518A (200980122002. 5) discloses a mixture composed of 2, 3, 3, 3-tetrafluoropropene (HFC-1234yf), 1,1,1,2 tetrafluoroethane (HFC-134a) and 1, 1-difluoroethane (HFC-152a); CN102083935A (200980125796. 0) discloses a mixture composed of 1, 1, 1, 2-tetrafluoroethane (HFC-134a) and 2, 3, 3, 3- tetrafluoropropene (HFC-1234yf). CN102083935A (200980125796. 0) discloses a mixture composed of 1, 1, 1, 2-tetrafluoroethane firing (HFC-134a) and 2, 3, 3, 3-tetrafluoropropene (HFC-1234yf); and CN102712837A (201080038152. 0) discloses a mixture composed of 1, 1, 1, 2-tetrafluoroethane (HFC-134a), 2 , 3, 3, 3-tetrafluoropropene (HFC-1234yf) and difluoromethane (HFC-32).

The refrigerant compositions disclosed in the above patents have such drawbacks as high GWP value, strong flammability, high temperature glide, low efficiency, small volume of cooling capacity, unable to be directly filled and used in HFC-134a system, etc.. Therefore, it is necessary to develop an alternative refrigerant used in the automotive air conditioners with excellent cooling performance, better compatibility with existing systems, and excellent environmental performance.

Further attention is drawn to CN102433197, disclosing a composition comprising at least one lubricant made of polyol esters (POE) or polyvinyl ether (PVE) and a refrigerant F comprising 1-99 wt.% of 2,3,3,3-tetrafluoropropene (HFO-1234yf) and 1-99 wt.% of trans- 1,3,3,3-tetrafluoropropene (trans HFO-1234ze).

Also, CONG, WEI ET AL.: "Study on the performance of F-Methyl Methyl Ether (HFE143a) as a refrigerant for automobile air-conditioning", REFRIGERATION & AIR CONDITIONING, vol. 22, no. 1,29 February 2008 (2008-02-29), pages 76-77, shows that the refrigeration performance of HFE143a is similar to R134a and the coefficient of performance (COP) is higher than the COP of R134a.

In addition, CN101014680 discloses the use of tetrafluoropropenes, particularly (HFO-1234) in a variety of applications, including refrigeration equipment.

Still further, CN102971394 discloses heat transfer systems, methods and compositions which utilize a heat transfer fluid comprising: (a) from about 30% to about 65% by weight of HFC-134a; (b) from about 0% to about 70% by weight of HF01234ze; and (c) from about 0% to about 70% by weight of HFO-1234yf, provided that the amount of HFO-1234ze and HFO-1234yf in the composition together is at least about 35% by weight, with the weight percent being based on the total of the components (a) - (c) in the composition.

### SUMMARY OF THE INVENTION

The object of the present invention is to provide a mixed refrigerant, which have more excellent environmental performance and use performance than HFC-134a. It can be used an alternative to HFC-134a in the system directly without changing any parts. It is a low-cost refrigerant.

In order to achieve the above object, the present invention adopts the following technical solutions.

A mixed refrigerant includes HFO-1234yf, HFO-1234ze(E) and HFE-143a, and the mass percent thereof is:
HFO-1234yf: 52%-90%;
HFO-1234ze(E): 5%-30%;
HFE- 143a: 5-18%.

The GWP value of the mixed refrigerant is less than 150.

For the above mixed refrigerant in the invention, the preferred mass percentage of various components is as follows:
HFO-1234yf: 65%-90%;
HFO-1234ze(E): 5%-20%;
HFE- 143a: 5-15%.

For the above mixed refrigerant in the invention, further, preferably the mass percentage of various components is as follows:
HFO-1234yf: 80%-90%;
HFO-1234ze(E): 5%-15%;
HFE- 143a: 5-10%.

The present invention provides a mixed refrigerant suitable for use as an alternative of HFC-134a, especially suitable for use as the alternative of HFC-134a in the automotive air conditioner. When it is used as alternative of HFC-134a in automotive air conditioner, the automotive air conditioner system need not change any part and the mixed refrigerant can be directly filled to replace HFC-134a.

Compared with prior art, the mixed refrigerant in the invention has the following advantages:
(1) Environmental performance is superior to HFC-134a, the ozone-depleting potential ODP value is zero, and the global warming potential (GWP) value is dramatically reduced compared with HFC-134a;
(2) It is safe in use, with low flammability;
(3) The evaporating pressure, condensing pressure and pressure ratio, etc. are quite equivalent to HFC-134a, and the cooling capacity per unit volume is higher than HFC-134a, with less temperature glide. The COP value is greater than HFC-134a, with low exhaust gas temperature, and excellent performance;
(4) Without changing any part of the equipment, the refrigerant can be used in a system originally using HFC-134a. It is compatible with the piping components of the originally used HFC-134a refrigeration system, and it can reduce the amount of filling, improve energy efficiency, save resources and energy.

### DETAILED DESCRIPTION OF THE EMBODIMENTS

In the present invention, the refrigerant is prepared through physically mixing of 2,3,3,3-tetrafluoropropene (HFO-1234yf), Trans-1,3,3,3-tetra-fluoropropene (HFO-1234ze(E)) and trifluoromehyl ether(CH₃OCH₃,HFE-143a) according to appropriate mixing ratios under the liquid state.

The said 2, 3, 3, 3- tetrafluoropropene (HFO-1234yf) has a molecular formula CH₂CFCF₃, with a molecular weight of 114.04, standard boiling point of -29.35 ° C, critical temperature of 94.7 °C, critical pressure of 3. 38MPa, and GWP value of 4.

The said Trans-1,3,3,3-tetra-fluoropropene (HFO-1234ze(E)) has a molecular formula CHFCHCF₃, with a molecular weight of 114.04, standard boiling point of -19° C, critical temperature of 109.4°C, critical pressure of 3.64 MPa, and GWP value of 6.

The said trifluoro methyl ether (CF₃OCH₃, HFE- 143a) has a molecular formula CF₃OCH₃, with a molecular weight of 100.04, standard boiling point of -24.0 °C, critical temperature of 104.8 °C, critical pressure of 3.59MPa, and GWP value of 750.

The following examples are illustrative of several embodiments of the present invention, but the invention is not limited to these specific embodiments. Technicians skilled in the art should be aware that the present invention encompasses all options, modifications and equivalents as specified in the claims.
Example 1: Physically mix HFO-1234yf, HFO-1234ze(E) and HFE-143a in the liquid phase according to a ratio of 52:30:18 (by mass percentage).
Example 2: Physically mix HFO-1234yf, HFO-1234ze(E) and HFE-143a in the liquid phase according to a ratio of 95:5:5 (by mass percentage).
Example 3: Physically mix HFO-1234yf, HFO-1234ze(E) and HFE-143a in the liquid phase according to a ratio of 65:20:15 (by mass percentage).
Example 4: Physically mix HFO-1234yf, HFO-1234ze(E) and HFE-143a in the liquid phase according to a ratio of 80:15:5 (by mass percentage).
Example 5: Physically mix HFO-1234yf, HFO-1234ze(E) and HFE-143a in the liquid phase according to a ratio of 85:5:10 (by mass percentage).

The features and effects of the invention are described by comparing the performance of above embodiment with HFC-134a.

### 1. Environmental performance

The environmental performance of above embodiment is compared with that of HFC-134a, as shown in table 1. For the ODP value, the value of CFC-11 is used as the reference value 1. 0, for the GWP value, the value of CO₂ is used as the reference value 1. 0 (100 years).

**Table 1 Environmental performance**

| Working medium | ODP | GWP |
|---|---|---|
| Example 1 | 0 | 140 |
| Example 2 | 0 | 40 |
| Example 3 | 0 | 120 |
| Example 4 | 0 | 40 |
| Example 5 | 0 | 80 |
| HFC-134a | 0 | 1430 |

As shown from above table 1, the ODP value of the above embodiments is zero and the value of global warming potential (GWP) is 40∼150, all less than that of HFC-134a and in line with EU MAC Directive (GWP value: no greater than 150). Its impact on the environment is much less than HFC-134a, and the environmental performance is excellent, and it can be used as a long term alternative of HFC-134a. The excellent environmental performance is a great advantage of this invention.

### 2. Temperature glide

**Table 2 Temperature glide table**

| Working medium | Bubble point temperature (°C) | Dew point temperature (°C) | Temperature glide |
|---|---|---|---|
| Example 1 | -28.70 | -27.94 | 0.76 |
| Example 2 | -29.84 | -29.78 | 0.07 |
| Example 3 | -29.40 | -29.03 | 0.37 |
| Example 4 | -29.52 | -29.38 | 0.14 |
| Example 5 | -30.04 | -29.99 | 0.05 |

As shown from above table, the temperature glide in all embodiments is less than 1°C, showing it is near- azeotropic mixture, facilitating the stable operation of the system.

### 3. Thermal parameters and thermodynamic properties

Under the automotive air conditioner conditions (ie, evaporation temperature = -1.0 °C, condensing temperature = 62. 0 °C, intake air temperature = 9°C, supercooled temperature = 57°C), the thermal parameters (i.e. evaporation pressure P₀, condensing pressure Pₖ, pressure ratio Pₖ / P₀, exhaust temperature t₂) and relative heat capacity (i.e. relative COP, the relative heat capacity per unit mass q₀, relative heating capacity per unit volume qᵥ, and relative power consumption per unit volume wᵥ) of above embodiments and HFC-134a are shown in table 3.

The above relative thermodynamic property refers to the ratio of thermodynamic property of various embodiments to that of HFC-134a, and the relative density refers to the relative density of the liquid at 25 ° C.

**Table 3 Comparison of thermal parameters and thermodynamic properties**

| Parameters | P₀ | Pₖ | Pₖ/P₀ | t₂ | Relative COP | Relative q₀ | Relative qₖ | Relative density |
|---|---|---|---|---|---|---|---|---|
| Unit | MPa | MPa | / | °C | / | / | / | / |
| Example 1 | 0.2967 | 1.7211 | 5.80 | 72.0 | 1.03 | 0.99 | 1.00 | 0.92 |
| Example 2 | 0.3101 | 1.7481 | 5.64 | 68.54 | 1.01 | 0.85 | 0.97 | 0.91 |
| Example 3 | 0.3057 | 1.7512 | 5.73 | 71.16 | 1.02 | 0.95 | 1.01 | 0.92 |
| Example 4 | 0.3068 | 1.7412 | 5.68 | 68.71 | 1.01 | 0.85 | 0.98 | 0.91 |
| Example 5 | 0.3131 | 1.7672 | 5.64 | 69.74 | 1.01 | 0.89 | 1.00 | 0.91 |
| HFC-134a | 0.2823 | 1.7628 | 6.24 | 77.4 | 1 | 1 | 1 | 1 |

As shown from table 3, under the automotive air conditioner conditions, the condensing pressure of above embodiment is equivalent to that of HFC-134a, but the pressure ratio and exhaust temperature are lower than those of HFC-134a, which can be directly filled in the original system using HFC-134a. The density of above embodiments is lower than that of HFC-134a, which can reduce the filing amount of working medium. The volumetric cooling capacity of above embodiments is basically equivalent to that HFC-134a and the COP value of above embodiments is greater than that of HFC-134a, thus, it has the energy-saving effect.

## Claims

1. A mixed refrigerant comprises HFO-1234yf, HFO-1234ze(E) and HFE-143a, and their mass percentages of all components are as follows:
HFO-1234yf: 52%-90%;
HFO-1234ze(E): 5%-30%;
HFE-143a: 5-18%.
The GWP value of the mixed refrigerant is less than 150.

2. The mixed refrigerant according to claim 1, wherein the mass percentages of all components are as follows:
HFO-1234yf: 65%-90%;
HFO-1234ze(E): 5%-20%;
HFE-143a: 5-15%.

3. The mixed refrigerant according to claim 2, wherein the mass percentages of all components are as follows:
HFO-1234yf: 80%-90%;
HFO-1234ze(E): 5%-15%;
HFE-143a: 5-10%.

4. Use of the mixed refrigerant according to any one of claims 1-3, wherein the refrigerant is used as an alternative of HFC-134a.

5. Use of the mixed refrigerant according to claim 4, wherein the mixed refrigerant is used as an alternative of HFC-134a used in the automotive air conditioner.

6. Use of the mixed refrigerant according to claim 5, wherein the automotive air conditioner system need not change any part and the mixed refrigerant can be directly filled as an alternative of HFC-134a.

## Patentansprüche

1. Kältemittelgemisch, umfassend HFO-1234yf, HFO-1234ze(E) und HFE-143a, und der prozentuale Anteil an der Masse beträgt jeweils wie folgt:
HFO-1234yf: 52%-90%;
HFO-1234ze (E): 5%-30%;
HFE-143a: 5-18%.
Der GWP-Wert des Kältemittelgemischs beträgt weniger als 150.

2. Kältemittelgemisch nach Anspruch 1, wobei der prozentuale Anteil an der Masse aller Komponenten jeweils wie folgt ist:
HFO-1234yf: 65%-90%;
HFO-1234ze (E): 5%-20%;
HFE-143a: 5-15%.

3. Kältemittelgemisch nach Anspruch 2, wobei der prozentuale Anteil an der Masse aller Komponenten jeweils wie folgt ist:
HFO-1234yf: 80%-90%;
HFO-1234ze (E): 5%-15%;
HFE-143a: 5-10%.

4. Verwendung des Kältemittelgemischs nach einem der Ansprüche 1-3, wobei das Kältemittel als eine Alternative zu HFC-134a verwendet wird.

5. Verwendung des Kältemittelgemischs nach Anspruch 4, wobei das Kältemittelgemisch als eine Alternative zu HFC-134a verwendet wird, das in Klimaanlagen von Automobilen verwendet wird.

6. Verwendung des Kältemittelgemischs nach Anspruch 5, wobei bei dem Klimaanlagensystem des Automobils kein Teil ausgetauscht werden muss und das Kältemittelgemisch direkt als eine Alternative zu HFC-134a eingefüllt werden kann.

## Revendications

1. Réfrigérant mixte qui comprend HFO-1234yf, HFO-1234ze(E) et HFE-143a, et leurs pourcentages en masse de tous les composants sont comme suit :
HFO-1234yf : 52 à 90 % ;
HFO-1234ze(E) : 5 à 30 %
HFE-143a : 5 à 18 %.
La valeur de GWP du réfrigérant mixte est de moins de 150.

2. Réfrigérant mixte selon la revendication 1, dans lequel les pourcentages en masse de tous les composants sont comme suit :
HFO-1234yf : 65 à 90 % ;
HFO-1234ze (E) : 5 à 20 % ;
HFE-143a : 5 à 15 %.

3. Réfrigérant mixte selon la revendication 2, dans lequel les pourcentages en masse de tous les composants sont comme suit :
HFO-1234yf : 80 à 90 % ;
HFO-1234ze (E) : 5 à 15 % ;
HFE143a : 5 à 10 %.

4. Utilisation du réfrigérant mixte selon l'une quelconque des revendications 1 à 3, dans lequel le réfrigérant est utilisé comme une alternative à HFC-134a.

5. Utilisation du réfrigérant mixte selon la revendication 4, dans laquelle le réfrigérant mixte est utilisé comme une alternative à HFC-134a utilisé dans le climatiseur automobile.

6. Utilisation du réfrigérant mixte selon la revendication 5, dans laquelle le système de climatiseur automobile n'a pas besoin de changer une quelconque partie et le réfrigérant peut être chargé directement comme une alternative à HFE143a.
